# DEMANDE DE BREVET EUROPEEN

(11) **EP 3 836 640 A1**
(43) Date de publication de la demande: **16.06.2021**
(21) Numéro de dépôt: 20213086.0
(22) Date de dépôt: 10.12.2020
(51) Int. Cl.: H04W 52/02, H04W 84/18, H04W 72/04, H04W 28/02

(54) **PROCÉDÉ ET SYSTÈME DE TRANSMISSION DE TRAMES DE DONNÉES DANS UN RÉSEAU DE COMMUNICATION RADIO D'UN BÂTIMENT**

(30) Priorité: 12.12.2019 FR 1914281
(71) Demandeur: Delta Dore, 35270 Bonnemain (FR)
(72) Inventeur: BRIOLLE DIT BRIONNE, Philippe, 35270 Bonnemain (FR); LEDUC, Benoît, 35270 Bonnemain (FR); PERRAUD, Xavier, 35270 Bonnemain (FR); LE FERRAND, Vincent, 35270 Bonnemain (FR)
(74) Mandataire: Cabinet Le Guen Maillet

(57) **Abrégé**

L'invention concerne un procédé et un système de transmission de trames de données dans un réseau de communication radio d'un bâtiment, le réseau de communication radio comprenant des nœuds de communication alimentés en énergie électrique par une pile qui activent périodiquement leur module de communication radio et au moins un nœud de communication alimenté en énergie électrique par le réseau de fourniture en énergie électrique du bâtiment qui active en permanence son module de communication radio. Selon l'invention :
- un nœud de communication alimenté en énergie électrique par une pile émet une trame de données sur le réseau de communication radio à destination d'au moins un autre nœud,
- le nœud de communication alimenté en énergie électrique par le réseau de fourniture en énergie électrique du bâtiment reçoit (E50) la trame de données, émet (E52) un signal prédéterminé sur le réseau de communication radio et émet (E53) la trame de données reçue.

## Description

### DOMAINE TECHNIQUE

La présente invention concerne un procédé et un système de transmission de trames de données dans un réseau de communication radio d'un bâtiment.

### ETAT DE LA TECHNIQUE ANTERIEURE

Les systèmes domotiques tendent aujourd'hui à fournir des outils de supervision et de contrôle des installations des habitations. Certains capteurs ou actionneurs utilisés dans les systèmes domotiques sont placés dans de nombreux endroits de l'habitation et parfois ne peuvent pas aisément être alimentés en énergie électrique par le réseau de fourniture en énergie électrique du bâtiment. D'autres peuvent l'être.

La communication entre les différents équipements du réseau domotique est, par souci de simplification du câblage, réalisée par l'intermédiaire d'un réseau de communication radio. Les équipements domotiques sont par la suite appelés nœuds de communication.

Afin de limiter la consommation électrique des nœuds de communication, ceux-ci n'activent leur module radio que périodiquement. Lorsqu'un nœud de communication souhaite émettre une trame de données, celui-ci transfère préalablement un signal prédéterminé, dit signal de réveil, sur le réseau de communication radio.

Les autres nœuds de communication activent périodiquement leur module radio avec une périodicité inférieure à la durée du signal prédéterminé, détectent ainsi le signal prédéterminé et mettent leur module radio dans un mode de fonctionnement leur permettant de recevoir et de traiter la trame de données.

Lorsque le nœud de communication est alimenté en énergie électrique par une pile ou une batterie, l'énergie électrique consommée par celui-ci pour l'émission du message de réveil a un impact sur la longévité de la pile. Ceci est particulièrement le cas lorsqu'un ou plusieurs nœuds de communication émettent souvent des trames de données.

La faible longévité des piles de tels nœuds de communication a un impact sur l'autonomie de l'ensemble du système domotique.

### EXPOSE DE L'INVENTION

La présente invention vise à garantir que l'ensemble des nœuds de communication alimentés en énergie électrique par une pile puisse fonctionner pendant la plus grande période de temps possible sans avoir à remplacer ou recharger la ou les piles des nœuds de communication.

A cette fin, selon un premier aspect, l'invention propose un procédé de transmission de trames de données dans un réseau de communication radio d'un bâtiment, le réseau de communication radio comprenant des nœuds de communication alimentés en énergie électrique par une pile et au moins un nœud de communication alimenté en énergie électrique par le réseau de fourniture en énergie électrique du bâtiment, chaque nœud de communication comportant un module radio, caractérisé en ce que les nœuds de communication alimentés en énergie électrique par une pile activent périodiquement leur module de communication radio et le nœud de communication alimenté en énergie électrique par le réseau de fourniture en énergie électrique du bâtiment active en permanence son module de communication radio et en ce que le procédé comporte les étapes de :
- émission par un nœud de communication alimenté en énergie électrique par une pile d'une trame de données sur le réseau de communication radio à destination d'au moins un autre nœud du réseau de communication radio,
- réception par le nœud de communication alimenté en énergie électrique par le réseau de fourniture en énergie électrique du bâtiment de la trame de données,
- émission par le nœud de communication alimenté en énergie électrique par le réseau de fourniture en énergie électrique du bâtiment d'un signal prédéterminé sur le réseau de communication radio,
- émission par le nœud de communication alimenté en énergie électrique par le réseau de fourniture en énergie électrique du bâtiment de la trame de données reçue.

L'invention concerne aussi un système de transmission de trame de données dans un réseau de communication radio d'un bâtiment, le réseau de communication radio comprenant des nœuds de communication alimentés en énergie électrique par une pile et au moins un nœud de communication alimenté en énergie électrique par le réseau de fourniture en énergie électrique du bâtiment, chaque nœud de communication comportant un module radio, caractérisé en ce que les nœuds de communication alimentés en énergie électrique par une pile activent périodiquement leur module de communication radio et le nœud de communication alimenté en énergie électrique par le réseau de fourniture en énergie électrique du bâtiment active en permanence son module de communication radio et en ce que le système comporte :
- des moyens d'émission, compris dans un nœud de communication alimenté en énergie électrique par une pile, d'une trame de données sur le réseau de communication radio à destination d'au moins un autre nœud du réseau de communication radio,
- des moyens de réception, compris dans le nœud de communication alimenté en énergie électrique par le réseau de fourniture en énergie électrique du bâtiment, de la trame de données,
- des moyens d'émission, compris dans le nœud de communication alimenté en énergie électrique par le réseau de fourniture en énergie électrique du bâtiment, d'un signal prédéterminé sur le réseau de communication radio,
- des moyens d'émission, compris dans le nœud de communication alimenté en énergie électrique par le réseau de fourniture en énergie électrique du bâtiment, de la trame de données reçue.

Ainsi, la présente invention permet de garantir que l'ensemble des nœuds de communication alimentés en énergie électrique par une pile puisse fonctionner pendant la plus grande période de temps possible sans avoir à remplacer ou recharger la ou les piles des nœuds de communication.

Selon un mode particulier, préalablement à l'émission du signal prédéterminé, le procédé comporte en outre l'étape d'émission par le nœud de communication alimenté en énergie électrique par le réseau de fourniture en énergie électrique du bâtiment d'un message d'acquittement de la trame de données reçue.

Ainsi, le nœud de communication alimenté en énergie électrique par une pile qui envoie la trame de données est prévenu de la bonne réception de la trame de données.

Selon un mode particulier, à chaque nœud de communication est allouée une période temporelle, distincte des périodes temporelles allouées aux autres nœuds de communication et lorsqu'un nœud de communication envoie une trame de données, la trame de données est émise dans la période temporelle qui lui est allouée et lorsque le nœud de communication alimenté en énergie électrique par le réseau de fourniture en énergie électrique du bâtiment reçoit la trame de données, le nœud de communication alimenté en énergie électrique par le réseau de fourniture en énergie électrique du bâtiment émet le signal prédéterminé sur le réseau de communication radio et la trame de données reçue sans tenir compte de la période temporelle qui lui est allouée.

Ainsi, l'émission du signal prédéterminé qui permet le réveil des nœuds de communication alimentés en énergie électrique par une pile est effectuée par le nœud de communication alimenté en énergie électrique par le réseau de fourniture en énergie électrique du bâtiment. L'émission du signal prédéterminé, énergivore de par la durée du signal, n'a pas à être effectuée par les nœuds de communication alimentés en énergie électrique par une pile. Ainsi, ce procédé améliore l'autonomie des nœuds alimentés en énergie électrique par une pile. Selon un mode particulier, le procédé comporte en outre l'étape d'émission, par le nœud de communication alimenté en énergie électrique par le réseau de fourniture en énergie électrique du bâtiment, de la trame de données reçue dans la période temporelle qui lui est allouée.

Ainsi réveillé, les nœuds de communication alimentés en énergie électrique par une pile sont à l'écoute de trames de données très peu consommatrices en énergie électrique.

Selon un mode particulier, le procédé comporte les étapes effectuées par chaque nœud de communication alimenté en énergie électrique par une pile qui est différent du nœud de communication alimenté en énergie électrique par une pile ayant émis la trame de données, dit autre nœud de :
- détection du signal prédéterminé émis par le nœud de communication alimenté en énergie électrique par le réseau de fourniture en énergie électrique du bâtiment, - réception de la trame de données émise par le nœud de communication alimenté en énergie électrique par le réseau de fourniture en énergie électrique du bâtiment,
- émission, dans la période temporelle qui lui est allouée, de la trame de données émise par le nœud de communication alimenté en énergie électrique par le réseau de fourniture en énergie électrique du bâtiment.

Ainsi, les nœuds de communication alimentés par pile peuvent émettre des données au nœud alimenté par le réseau de fourniture en énergie électrique du bâtiment et acquitter la réception de la trame de données émise par le nœud de communication qui a émis la trame de données initiale.

Selon un mode particulier, le procédé comporte en outre les étapes effectuées par le nœud de communication alimenté en énergie électrique par le réseau de fourniture en énergie électrique du bâtiment, de :
- vérification si chaque autre nœud de communication alimenté en énergie électrique a émis, dans la période temporelle qui lui est allouée, au moins la trame de données émise par le nœud de communication alimenté en énergie électrique par le réseau de fourniture en énergie électrique du bâtiment,
- émission d'un message de finalisation de la transmission de la trame de données.

Ainsi, le nœud de communication qui a émis la trame de données initiale obtient l'information sur la bonne réception de la trame de données, et les données que chaque nœud aurait ajoutées dans la trame de données.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un réseau de communication radio d'un système domotique dans lequel la présente invention est implémentée ;
[Fig. 2] représente un exemple d'architecture d'un nœud de communication alimenté en énergie électrique par le réseau de fourniture en énergie électrique du bâtiment dans lequel la présente invention est implémentée ;
[Fig. 3] représente un exemple d'architecture d'un nœud de communication alimenté en énergie électrique par une pile dans lequel la présente invention est implémentée ;
[Fig. 4] représente un exemple de chronogramme de signaux et de trames de données émises sur le réseau de communication radio ;
[Fig. 5] représente un exemple d'algorithme exécuté par le nœud de communication alimenté en énergie électrique par le réseau de fourniture en énergie électrique du bâtiment selon la présente invention.

### EXPOSE DETAILLE DE MODES DE REALISATION

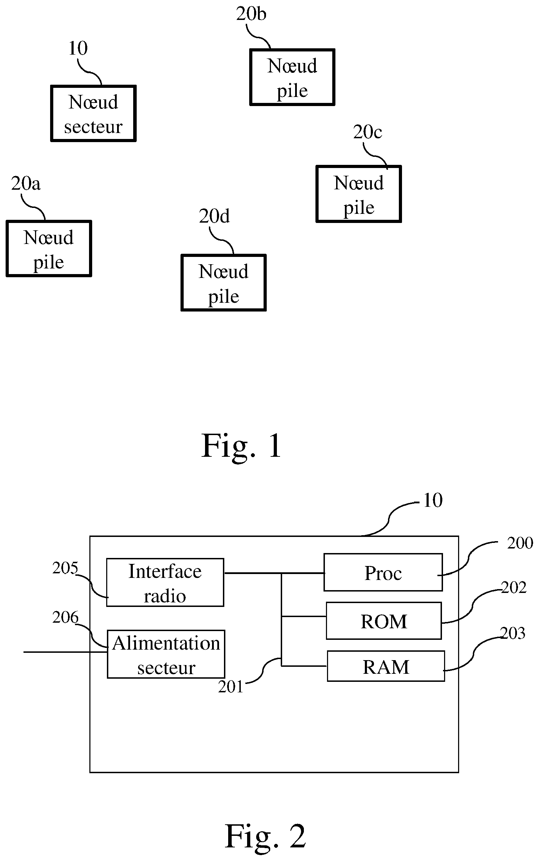

La Fig. 1 représente un réseau de communication radio d'un système domotique dans lequel la présente invention est implémentée.

Dans l'exemple de la Fig. 1, quatre nœuds de communication notés 20a, 20b, 20c et 20d alimentés en énergie électrique par une pile et un nœud de communication noté 10 alimenté en énergie électrique par le réseau de fourniture en énergie électrique du bâtiment, sont représentés.

Le nœud de communication noté 10 alimenté en énergie électrique par le réseau de fourniture en énergie électrique du bâtiment est placé à un endroit qui lui permet de communiquer avec chaque nœud de communication 20a, 20b, 20c et 20d alimenté en énergie électrique par une pile.

Les nœuds de communication 10 et 20 communiquent entre eux par l'intermédiaire d'un réseau de communication radio non représenté en Fig. 1.

Selon la présente invention, un nœud de communication alimenté en énergie électrique par une pile émet une trame de données sur le réseau de communication radio à destination d'au moins un autre nœud du réseau de communication radio,
- le nœud de communication alimenté en énergie électrique par le réseau de fourniture en énergie électrique du bâtiment reçoit la trame de données,
- le nœud de communication alimenté en énergie électrique par le réseau de fourniture en énergie électrique du bâtiment émet un signal d'acquittement à destination du nœud alimenté par pile qui a émis la trame de données,
- le nœud de communication alimenté en énergie électrique par le réseau de fourniture en énergie électrique du bâtiment émet un signal prédéterminé sur le réseau de communication radio pour réveiller les autres nœuds de communication alimentés en énergie électrique par une pile,
- le nœud de communication alimenté en énergie électrique par le réseau de fourniture en énergie électrique du bâtiment émet ensuite la trame de données reçue.

Ainsi, seul le nœud de communication alimenté en énergie électrique par le réseau de fourniture en énergie électrique du bâtiment émet le signal prédéterminé.

La Fig. 2 représente un exemple d'architecture d'un nœud de communication alimenté en énergie électrique par le réseau de fourniture en énergie électrique du bâtiment dans lequel la présente invention est implémentée.

Le nœud de communication alimenté en énergie électrique par le réseau de fourniture en énergie électrique du bâtiment 10 comprend :
- un processeur, micro-processeur, ou microcontrôleur 200 ;
- une mémoire volatile 203 ;
- une mémoire non volatile 202 ;
- une interface radio 205,
- une alimentation en énergie électrique par le réseau de fourniture en énergie électrique du bâtiment 206,
- un bus de communication 201 reliant le processeur 200 à la mémoire ROM 202, à la mémoire RAM 203 et à l'interface radio 205.

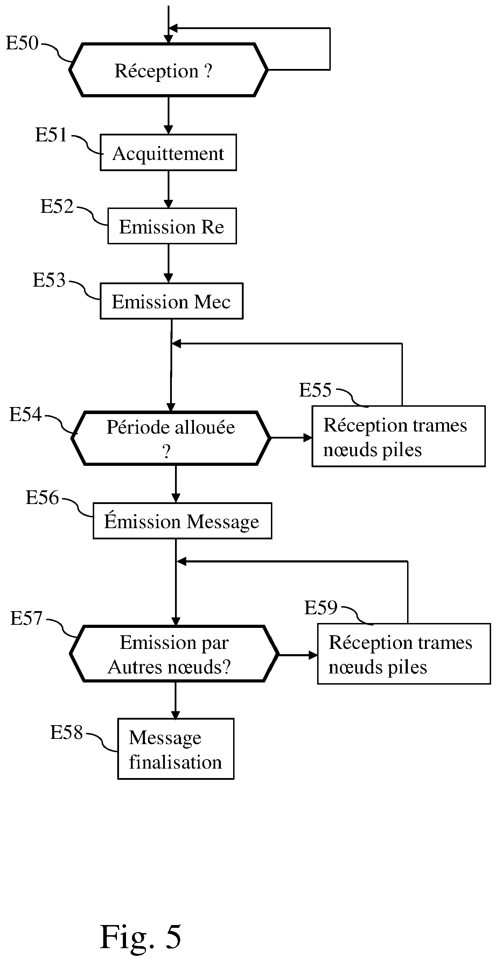

Le processeur 200 est capable d'exécuter des instructions chargées dans la mémoire volatile 203 à partir de la mémoire non volatile 202. Lorsque le nœud de communication alimenté en énergie électrique par le réseau de fourniture en énergie électrique du bâtiment 10 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

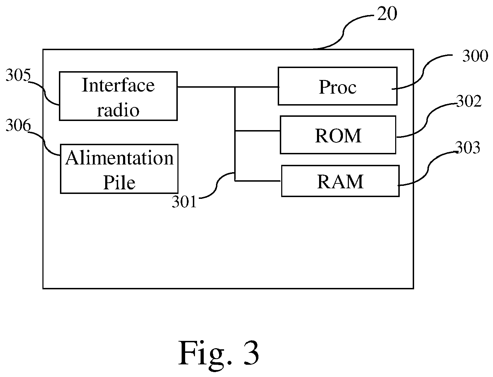

La Fig. 3 représente un exemple d'architecture d'un nœud de communication alimenté en énergie électrique par une pile dans lequel la présente invention est implémentée.

Le nœud de communication alimenté en énergie électrique par une pile 20 comprend :
- un processeur, micro-processeur, ou microcontrôleur 300 ;
- une mémoire volatile 303 ;
- une mémoire non volatile 302 ;
- une interface radio 305,
- une alimentation en énergie électrique par une pile 306,
- un bus de communication 301 reliant le processeur 300 à la mémoire ROM 302, à la mémoire RAM 303 et à l'interface radio 305.

Le processeur 300 est capable d'exécuter des instructions chargées dans la mémoire volatile 303 à partir de la mémoire non volatile 302. Lorsque le nœud de communication alimenté en énergie électrique par une pile 20 est mis sous tension, le processeur 300 est capable de lire de la mémoire volatile 303 des instructions et de les exécuter. Ces instructions forment un programme d'ordinateur qui cause la mise en œuvre, par le processeur 300, d'une partie du procédé selon l'invention.

Tout ou partie du procédé peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

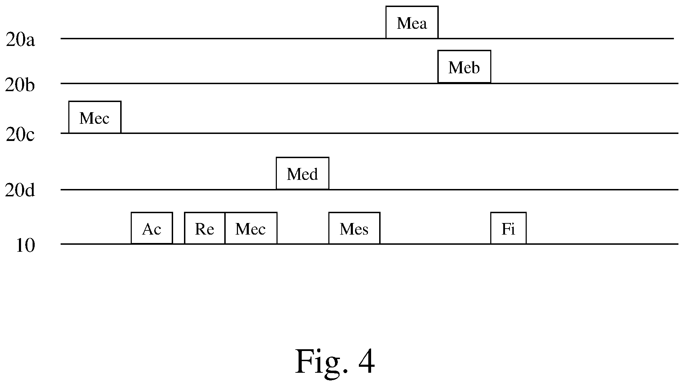

La Fig. 4 représente un exemple de chronogramme de signaux et de trames de données émises sur le réseau de communication radio.

A chaque nœud de communication est allouée une période temporelle, distincte des périodes temporelles allouées aux autres nœuds de communication.

Dans l'exemple de la Fig. 4, le nœud de communication 20c alimenté en énergie électrique par une pile émet une trame de données Mec sur le réseau de communication radio à destination d'au moins un autre nœud du réseau de communication radio.

Le nœud de communication 10 alimenté en énergie électrique par le réseau de fourniture en énergie électrique du bâtiment reçoit la trame de données.

Le nœud de communication 10 alimenté en énergie électrique par le réseau de fourniture en énergie électrique du bâtiment émet un message d'acquittement Ac de la trame de données reçue.

Le nœud de communication 10 alimenté en énergie électrique par le réseau de fourniture en énergie électrique du bâtiment émet un signal prédéterminé Re sur le réseau de communication radio. Le signal prédéterminé a pour fonction de mettre les autres nœuds de communication 20a, 20b et 20d alimentés en énergie électrique par une pile dans un mode de fonctionnement dans lequel ils sont capables de recevoir, voire de traiter la trame de données reçue.

Le nœud de communication 10 alimenté en énergie électrique par le réseau de fourniture en énergie électrique du bâtiment émet la trame de données reçue Mec.

La trame de données émise par le nœud de communication 10 comporte au moins le contenu de la trame de données Mec.

Le nœud de communication 20d alimenté en énergie électrique par une pile émet dans la période temporelle qui lui est allouée une trame de données Med sur le réseau de communication radio à destination d'au moins un autre nœud du réseau de communication radio.

La trame de données émise par le nœud de communication 20d comporte au moins le contenu de la trame de données Mec.

Le nœud de communication 10 alimenté en énergie électrique par le réseau de fourniture en énergie électrique du bâtiment émet dans la période temporelle qui lui est allouée, la trame de données Mes, constituée de la trame de données reçue Mec et des trames reçues par les autres nœuds de communication alimentés par pile.

Le nœud de communication 20a alimenté en énergie électrique par une pile émet dans la période temporelle qui lui est allouée une trame de données Mea sur le réseau de communication radio à destination d'au moins un autre nœud du réseau de communication radio.

La trame de données émise par le nœud de communication 20a comporte au moins le contenu de la trame de données Mes.

Le nœud de communication 20b alimenté en énergie électrique par une pile émet dans la période temporelle qui lui est allouée une trame de données Meb sur le réseau de communication radio à destination d'au moins un autre nœud du réseau de communication radio.

La trame de données émise par le nœud de communication 20b comporte au moins le contenu de la trame de données Mes.

Le nœud de communication 10 alimenté en énergie électrique par le réseau de fourniture en énergie électrique du bâtiment vérifie si tous les autres nœuds de communication 20a, 20b et 20d ont émis une trame de données et dans l'affirmative, émet un message de finalisation Fi de la transmission de la trame de données.

La Fig. 5 représente un exemple d'algorithme exécuté par le nœud de communication alimenté en énergie électrique par le réseau de fourniture en énergie électrique du bâtiment selon la présente invention.

Le présent algorithme est décrit dans un exemple dans lequel il est exécuté par le processeur 200.

A l'étape E50, le processeur 200 vérifie, par l'intermédiaire de l'interface radio 205, si une trame de données Mec est reçue d'un nœud de communication 20 alimenté en énergie électrique par une pile.

Dans l'affirmative, le processeur 200 passe à l'étape E51. Dans la négative, le processeur 200 reste à l'étape E50.

A l'étape E51, le processeur 200 commande l'interface radio 205 pour l'émission transfert d'un message d'acquittement Ac.

A l'étape E52, le processeur 200 commande l'interface radio 205 pour l'émission d'un message prédéterminé Re.

A l'étape E53, le processeur 200 commande l'interface radio 205 pour l'émission de la trame de données reçue Mec.

A l'étape E54, le processeur 200 vérifie si son horloge interne est à une heure correspondant au début de la période temporelle qui lui est allouée.

Dans la négative, le nœud de communication alimenté en énergie électrique par le réseau de fourniture en énergie électrique du bâtiment reçoit les trames émises par les nœuds 20 alimentés par une pile à l'étape E55 et retourne à l'étape E54.

Dans l'affirmative, le processeur 200 passe à l'étape E56.

A l'étape E56, le processeur 200 commande l'interface radio 205 pour l'émission d'une trame de données Mes comportant au moins le contenu de la trame de données reçue Mes.

A l'étape E57, le processeur vérifie si tous les autres nœuds de communication 20a, 20b et 20d ont émis une trame de données.

Dans la négative, le nœud de communication alimenté en énergie électrique par le réseau de fourniture en énergie électrique du bâtiment reçoit les trames émises par les nœuds 20 alimentés par une pile à l'étape E59 et retourne à l'étape E57.

Dans l'affirmative, à l'étape E58 le processeur 200 commande l'interface radio 205 pour l'émission d'un message de finalisation Fi de la transmission de la trame de données.

## Revendications

1. Procédé de transmission de trames de données dans un réseau de communication radio d'un bâtiment, le réseau de communication radio comprenant des nœuds de communication alimentés en énergie électrique par une pile et au moins un nœud de communication alimenté en énergie électrique par le réseau de fourniture en énergie électrique du bâtiment, chaque nœud de communication comportant un module radio, **caractérisé en ce que** les nœuds de communication alimentés en énergie électrique par une pile activent périodiquement leur module de communication radio et le nœud de communication alimenté en énergie électrique par le réseau de fourniture en énergie électrique du bâtiment active en permanence son module de communication radio, et **en ce que** le procédé comporte les étapes de :
- émission par un nœud de communication alimenté en énergie électrique par une pile d'une trame de données sur le réseau de communication radio à destination d'au moins un autre nœud du réseau de communication radio,
- réception (E50) par le nœud de communication alimenté en énergie électrique par le réseau de fourniture en énergie électrique du bâtiment de la trame de données,
émission (E52) par le nœud de communication alimenté en énergie électrique par le réseau de fourniture en énergie électrique du bâtiment d'un signal prédéterminé sur le réseau de communication radio, le signal prédéterminé ayant pour fonction de mettre les nœuds de communication alimentés en énergie électrique par une pile dans un mode de fonctionnement dans lequel ils sont capables de recevoir la trame de données reçue,
- émission (E53) par le nœud de communication alimenté en énergie électrique par le réseau de fourniture en énergie électrique du bâtiment de la trame de données reçue.

2. Procédé selon la revendication 1, **caractérisé en ce que** préalablement à l'émission du signal prédéterminé le procédé comporte en outre l'étape d'émission par le nœud de communication alimenté en énergie électrique par le réseau de fourniture en énergie électrique du bâtiment d'un message d'acquittement de la trame de données reçue.

3. Procédé selon l'une quelconque des revendications précédentes, **caractérisé en ce qu'**à chaque nœud de communication est allouée une période temporelle, distincte des périodes temporelles allouées aux autres nœuds de communication et **en ce que** lorsqu'un nœud de communication envoie une trame de données, la trame de données est émise dans la période temporelle qui lui est allouée et lorsque le nœud de communication alimenté en énergie électrique par le réseau de fourniture en énergie électrique du bâtiment reçoit la trame de données, le nœud de communication alimenté en énergie électrique par le réseau de fourniture en énergie électrique du bâtiment émet le signal prédéterminé sur le réseau de communication radio et la trame de données reçue sans tenir compte de la période temporelle qui lui est allouée.

4. Procédé selon la revendication 3, **caractérisé en ce que** le procédé comporte en outre l'étape d'émission par le nœud de communication alimenté en énergie électrique par le réseau de fourniture en énergie électrique du bâtiment de la trame de données reçue dans la période temporelle qui lui est allouée.

5. Procédé selon la revendication 3 ou 4, **caractérisé en ce que** le procédé comporte les étapes effectuées par chaque nœud de communication alimenté en énergie électrique par une pile qui est différent du nœud de communication alimenté en énergie électrique par une pile ayant émis la trame de données, dit autre nœud de :
- détection du signal prédéterminé émis par le nœud de communication alimenté en énergie électrique par le réseau de fourniture en énergie électrique du bâtiment,
- réception de la trame de donnée émise par le nœud de communication alimenté en énergie électrique par le réseau de fourniture en énergie électrique du bâtiment,
- émission, dans la période temporelle qui lui est allouée, de la trame de données émise par le nœud de communication alimenté en énergie électrique par le réseau de fourniture en énergie électrique du bâtiment.

6. Procédé selon la revendication 5, **caractérisé en ce que** le procédé comporte en outre les étapes effectuées par le nœud de communication alimenté en énergie électrique par le réseau de fourniture en énergie électrique du bâtiment, de :
- vérification si chaque autre nœud de communication alimenté en énergie électrique a émis, dans la période temporelle qui lui est allouée, au moins la trame de données émise par le nœud de communication alimenté en énergie électrique par le réseau de fourniture en énergie électrique du bâtiment,
- émission d'un message de finalisation de la transmission de la trame de données.

7. Système de transmission de trame de données dans un réseau de communication radio d'un bâtiment, le réseau de communication radio comprenant des nœuds de communication alimentés en énergie électrique par une pile et au moins un nœud de communication alimenté en énergie électrique par le réseau de fourniture en énergie électrique du bâtiment, chaque nœud de communication comportant un module radio, **caractérisé en ce que** les nœuds de communication alimentés en énergie électrique par une pile activent périodiquement leur module de communication radio et le nœud de communication alimenté en énergie électrique par le réseau de fourniture en énergie électrique du bâtiment active en permanence son module de communication radio et **en ce que** le système comporte :
- des moyens d'émission, compris dans un nœud de communication alimenté en énergie électrique par une pile, d'une trame de données sur le réseau de communication radio à destination d'au moins un autre nœud du réseau de communication radio,
- des moyens de réception, compris dans le nœud de communication alimenté en énergie électrique par le réseau de fourniture en énergie électrique du bâtiment, de la trame de données,
- des moyens d'émission, compris dans le nœud de communication alimenté en énergie électrique par le réseau de fourniture en énergie électrique du bâtiment, d'un signal prédéterminé sur le réseau de communication radio, le signal prédéterminé ayant pour fonction de mettre les nœuds de communication alimentés en énergie électrique par une pile dans un mode de fonctionnement dans lequel ils sont capables de recevoir la trame de données reçue,
- des moyens d'émission, compris dans le nœud de communication alimenté en énergie électrique par le réseau de fourniture en énergie électrique du bâtiment, de la trame de données reçue.
